# EUROPEAN PATENT APPLICATION

(11) **EP 4 667 871 A1**
(43) Date of publication of application: **24.12.2025**
(21) Application number: 24813779.6
(22) Date of filing: 29.02.2024
(51) Int. Cl.: G01C 21/00, A01D 34/00

(54) **MAP MODIFICATION METHOD AND APPARATUS, ELECTRONIC DEVICE, STORAGE MEDIUM, AND PROGRAM PRODUCT**

(30) Priority: 29.05.2023 CN 202310609467
(71) Applicant: Willand (Beijing) Technology Co., Ltd., Beijing 100192 (CN)
(72) Inventor: ZHANG, Shaoguang, Beijing 100192 (CN); LIN, Degan, Beijing 100192 (CN); ZHANG, Lin, Beijing 100192 (CN); YAN, Xiaoqi, Beijing 100192 (CN)
(74) Representative: Regimbeau
(86) International application number: PCT/CN2024/079323
(87) International publication number: WO 2024/244573

(57) **Abstract**

A map modification method and apparatus, an electronic device, a storage medium, and a program product. The method is applied to a control assembly of a mower, and comprises: receiving a first control instruction, and according to the first control instruction, controlling a mower to travel from a first start point to a second start point along an original target element (S201); receiving a start point confirmation instruction, and according to the start point confirmation instruction, taking the second start point as a start point for modifying the original target element (S202); and receiving a second control instruction, controlling, according to the second control instruction, the mower to travel from the second start point to an end point, and determining an updated target element according to a traveling trajectory from the second start point to the end point (S203). A position point is always attached on the original target element, so that the position point is not separated from the original target element, the step of re-adjusting the second start point to the original target element is omitted, a modification process is more visual and can correspond to an actual scenario, and the determined second start point is more accurate, thereby improving the accuracy of map modification.

## Description

### CROSS-REFERENCE TO RELATED APPLICATION

The present application claims priority to Chinese Patent Application No. 202310609467.5 filed with China National Intellectual Property Administration (CNIPA) on May 29, 2023, and entitled "MAP MODIFICATION METHOD AND APPARATUS, ELECTRONIC DEVICE AND STORAGE MEDIUM", the contents of which are hereby incorporated by reference in its entirety.

### TECHNICAL FIELD

The present disclosure relates to the technical field of electronic devices, and in particular, to a map and device for modifying a map, an electronic device, a storage medium, and a program product.

### BACKGROUND

With the continuous improvement of people's living standards, more and more people are using a lawn mower to trim their lawns, which can reduce people's labor intensity and human resource costs.

Before using the lawn mower for mowing the grass, it is necessary to establish a map firstly. For example, a user may remotely control or push the lawn mower to travel along a boundary of a working area. Once the map is established, the lawn mower can mow the grass based on the established map. However, there are often scenarios where a partial modification to the established map is required. For example, a lawn is expanded or a certain area in the lawn is designated for other purposes. In the related art, a partial modification to the established map is usually not allowed. When the modification are needed, the map must be deleted and then be redrawn; or the map may only be modified through an application (APP), for example, a map boundary in the APP is adjusted manually, which may result in a problem that the modified boundary does not correspond to an actual scenario.

### SUMMARY

The present disclosure provides a method and device for modifying a map, an electronic device, a storage medium, and program product, so as to solve the problem of the modified boundary not corresponding to an actual scenario when making a partial modification to an established map.

In a first aspect, the present disclosure provides a method for modifying a map, which is applied to a control component of a lawn mower, and includes the following operations.

A first control instruction is received, and the lawn mower is controlled to travel from a first starting point to a second starting point along an original target element according to the first control instruction. The first starting point and the second starting point are points on the original target element, and the original target element includes at least one of: an original virtual map boundary, an original prohibited zone boundary, or an original passage.

A starting point confirmation instruction is received, and the second starting point is set as a starting point for modifying the original target element according to the starting point confirmation instruction.

A second control instruction is received, the lawn mower is controlled to travel from the second starting point to an ending point according to the second control instruction, and an updated target element is determined according to a traveling trajectory between the second starting point and the ending point.

In an embodiment, the method further includes the following operations.

A first starting point position instruction is received.

The lawn mower is controlled to travel to the first starting point according to the first starting point position instruction. The first starting point position instruction is determined by a terminal device according to a first position point input by a user.

In an embodiment, controlling the lawn mower to travel to the first starting point includes the following operations.

A first path from a current position to the first starting point is planned, and the lawn mower is controlled to travel to the first starting point along the first path.

Alternatively, a third control instruction is received and the lawn mower is controlled to travel from the current position to the first starting point according to the third control instruction.

In an embodiment, when the first position point is located on the original target element, the first starting point is the first position point; when the first position point is not located on the original target element, the first starting point is a second position point on the original target element, which is closest to the first position point.

In an embodiment, during a process of the lawn mower traveling from the first starting point to the second starting point, a perpendicular distance from a position of the lawn mower to the original target element does not exceed a first threshold value.

In an embodiment, a front end orientation of the lawn mower when reaching the first starting point is the same as a target front end orientation, and the target front end orientation is a front end orientation of the lawn mower at the first starting point during establishing of the original target element.

In an embodiment, the first control instruction includes a traveling direction; and controlling the lawn mower to travel from the first starting point to the second starting point along the original target element includes the following operations.

The lawn mower is controlled to travel along the original target element according to the traveling direction. The first control instruction is generated by triggering a traveling direction control displayed on a terminal device, and the starting point confirmation instruction is generated by triggering a starting point confirmation control displayed on the terminal device.

In an embodiment, controlling the lawn mower to travel along the original target element according to the traveling direction includes the following operation.

When the traveling direction is opposite to the front end orientation of the lawn mower, wheels of the lawn mower is rotated in an opposite direction, such that the lawn mower travels backward along the original target element.

In an embodiment, controlling the lawn mower to travel along the original target element according to the traveling direction includes the following operation.

A traveling speed of the lawn mower is controlled to decrease when detecting that a number of times of the lawn mower traveling back and forth along a partial boundary segment exceeds a first preset number.

In an embodiment, the method includes the following operations.

A midpoint of an overlapping section of the partial boundary segment on which the lawn mower has traveled back and forth multiple times is determined as a recommended second starting point when detecting that the number of times of the lawn mower traveling back and forth along the partial boundary segment exceeds a second preset number; and the recommended second starting point is determined as the second starting point when receiving a confirmation instruction for the recommended second starting point from a user.

In an embodiment, the method includes the following operations.

An ending point confirmation instruction is received, and a current position of the lawn mower is determined as the ending point. The ending point confirmation instruction is generated by triggering an ending point confirmation control displayed on a terminal device.

The ending point confirmation control is displayed on the terminal device when the traveling trajectory of the lawn mower, starting from the second starting point, intersects with the original target element, or when a distance between a current position of the lawn mower and the original target element is less than a preset value.

In an embodiment, determining the updated target element according to the traveling trajectory between the second starting point and the ending point includes the following operations.

The traveling trajectory between the second starting point and the ending point is determined as a first editing line segment.

A boundary line between the second starting point and a target point in the original target element is deleted to obtain a remaining boundary line segment. When the ending point is located on the original target element, the target point is the ending point; when the ending point is not located on the original target element, the target point is a point on the original target element, which is closest to the ending point, or the target point is an intersection point between the original target element and a second path. The second path is a path traveled by the lawn mower in a preset direction, and the preset direction is a front end orientation of the lawn mower at the ending point.

The updated target element is determined according to the remaining boundary line segment and the first editing line segment.

In an embodiment, determining the updated target element according to the remaining boundary line segment and the first editing line segment includes the following operations.

When the ending point is not located on the original target element, the ending point is connected to the target point to obtain a second editing line segment. The second editing line segment is a straight line or an arc.

The first editing line segment, the second editing line segment, and the remaining boundary line segment are combined to obtain the updated target element.

In a second aspect, the present disclosure provides a method for modifying a map, which is applied to a terminal device, and includes the following operations.

when a lawn mower reaches a first starting point, a first control is displayed on a display interface, a first control instruction is generated in response to a triggering event from a user for the first control, and the first control instruction is sent to a control component of the lawn mower, such that the control component controls the lawn mower to travel from the first starting point to a second starting point along an original target element according to the first control instruction. The first starting point and the second starting point are points on the original target element, and the original target element includes at least one of: an original virtual map boundary, an original prohibited zone boundary, or an original passage.

A starting point confirmation control is displayed on the display interface after the lawn mower starts traveling from the first starting point, a starting point confirmation instruction is generated in response to a triggering event from the user for the starting point confirmation control, and the starting point confirmation instruction is sent to the control component, such that the control component sets the second starting point as a starting point for modifying the original target element according to the starting point confirmation instruction.

A second control is displayed on the display interface after the starting point confirmation control is triggered, a second control instruction is generated in response to a triggering event from the user for the second control, and the second control instruction is sent to the control component, such that the control component controls the lawn mower to traveling from the second starting point to an ending point according to the second control instruction, and an updated target element is determined according to a traveling trajectory between the second starting point and the ending point.

In an embodiment, the method includes the following operations.

In response to a triggering event from the user for a first position point in the display interface, the first starting point is determined according to the first position point.

A first starting point position instruction containing the first starting point is sent to the control component, such that the control component controls the lawn mower to travel to the first starting point according to the first starting point position instruction.

In an embodiment, determining the first starting point according to the first position point includes the following operations.

When the first position point is located on the original target element, the first position point is determined as the first starting point.

When the first position point is not located on the original target element, a second position point on the original target element, which is closest to the first position point, is determined as the first starting point.

In an embodiment, the first control is a traveling direction control, and the first control instruction includes a traveling direction.

In an embodiment, the method includes the following operations.

In response to receiving a message from the control component indicating that a recommended second starting point has been determined, a recommended second starting point confirmation control is displayed on the display interface. In response to a triggering event from the user for the recommended second starting point confirmation control, a confirmation instruction of the user for the recommended second starting point is sent to the control component, such that the control component determines the recommended second starting point as the second starting point.

In an embodiment, the method includes the following operations.

An ending point confirmation control is displayed on the display interface when the traveling trajectory of the lawn mower, starting from the second starting point, intersects with the original target element, or when a distance between a current position of the lawn mower and the original target element is less than a preset value.

In response to a triggering event from the user for the ending point confirmation control, an ending point confirmation instruction is generated, and the ending point confirmation instruction is sent to the control component, such that the control component determines the current position of the lawn mower as the ending point according to the ending point confirmation instruction.

In a third aspect, the present disclosure provides a device for modifying a map, which is applied to a control component of a lawn mower, and includes a first control module, a starting point confirmation module, and a second control module.

The first control module is configured to: receive a first control instruction, and control the lawn mower to travel from a first starting point to a second starting point along an original target element according to the first control instruction. The first starting point and the second starting point are points on the original target element, and the original target element includes at least one of: an original virtual map boundary, an original prohibited zone boundary, or an original passage.

The starting point confirmation module is configured to: receive a starting point confirmation instruction, and set the second starting point as a starting point for modifying the original target element according to the starting point confirmation instruction.

The second control module is configured to: receive a second control instruction, control the lawn mower to travel from the second starting point to an ending point according to the second control instruction, and determine an updated target element according to a traveling trajectory between the second starting point and the ending point.

In a fourth aspect, the present disclosure provides a device for modifying a map, which is applied to a terminal device, and includes a first display module, a second display module, and a third display module.

A first display module is configured to display a first control on a display interface when a lawn mower reaches a first starting point, generate a first control instruction in response to a triggering event from a user for the first control, and send the first control instruction to a control component of the lawn mower, such that the control component controls the lawn mower to travel from the first starting point to a second starting point along an original target element according to a first control instruction. The first starting point and the second starting point are points on the original target element, and the original target element includes at least one of: an original virtual map boundary, an original prohibited zone boundary, or an original passage.

The second display module is configured to display a starting point confirmation control on the display interface after the lawn mower starts traveling from the first starting point, generate a starting point confirmation instruction in response to a triggering event from the user for the starting point confirmation control, and send the starting point confirmation instruction to the control component, such that the control component sets the second starting point as a starting point for modifying the original target element according to the starting point confirmation instruction.

The third display module is configured to: display a second control on the display interface after the starting point confirmation control is triggered, generate a second control instruction in response to a triggering event from the user for the second control, and send the second control instruction to the control component, such that the control component controls the lawn mower to traveling from the second starting point to an ending point according to the second control instruction, and determines an updated target element according to a traveling trajectory between the second starting point and the ending point.

In a fifth aspect, the present disclosure provides an electronic device, which includes: at least one processor and a memory.

The memory is configured to store computer-executable instructions.

The at least one processor is configured to execute the computer-executable instructions stored in the memory to cause the at least one processor to perform the method of any one of the first aspect or the second aspect.

In a sixth aspect, the present disclosure provides a computer-readable storage medium having computer-executable instructions stored therein, the computer-executable instructions is configured to, when executed by a processor, implement the method of any one of the first aspect or the second aspect.

In a seventh aspect, the present disclosure provides a computer program product, which includes: a computer program. The computer program is configured to, when executed by a processor, implement the method of any one of the first aspect or the second aspect.

The present disclosure provides a method and device for modifying a map, an electronic device, a storage medium, and program product. The method is applied to a control component of the lawn mower, and includes: receiving a first control instruction, and controlling the lawn mower to travel from a first starting point to a second starting point along an original target element according to the first control instruction, herein the first starting point and the second starting point are points on the original target element, and the original target element includes at least one of: an original virtual map boundary, an original prohibited zone boundary, or an original passage; receiving a starting point confirmation instruction, and setting the second starting point as a starting point for modifying the original target element according to the starting point confirmation instruction; receiving a second control instruction, controlling the lawn mower to travel from the second starting point to an ending point according to the second control instruction, and determining an updated target element according to a traveling trajectory between the second starting point and the ending point. In this way, a position point of the lawn mower does not deviate from the original target element by keeping the position point of the lawn mower always attached to the original target element, which saves an operation of re-adjusting the second starting point to the original target element. As a result, the modification process becomes more intuitive and can correspond to the actual scenario, and the second starting point is determined more accurately, thereby improving accuracy of the map modification.

### BRIEF DESCRIPTION OF THE DRAWINGS

The accompanying drawings here, which are incorporated into the specification and constitute a part of the specification, illustrate embodiments that conform to the present disclosure and are used together with the specification to explain the principles of the present disclosure.
FIG. 1 is a diagram illustrating an application scenario of a method for modifying a map according to an embodiment of the present disclosure.
FIG. 2 is a flowchart illustrating a method for modifying a map according to an embodiment of the present disclosure.
FIG. 3 is a first diagram illustrating a modification for an original virtual map boundary according to an embodiment of the present disclosure.
FIG. 4 is a second diagram illustrating a modification for an original virtual map boundary according to an embodiment of the present disclosure.
FIG. 5 is a third diagram illustrating a modification for an original virtual map boundary according to an embodiment of the present disclosure.
FIG. 6 is a fourth diagram illustrating a modification for an original virtual map boundary according to an embodiment of the present disclosure.
FIG. 7 is a fifth diagram illustrating a modification for an original virtual map boundary according to an embodiment of the present disclosure.
FIG. 8 is a sixth diagram illustrating a modification for an original virtual map boundary according to an embodiment of the present disclosure.
FIG. 9 is a flowchart illustrating another method for modifying a map according to an embodiment of the present disclosure.
FIG. 10 is a structural diagram of a device for modifying a map according to an embodiment of the present disclosure.
FIG. 11 a structural diagram of another device for modifying a map according to an embodiment of the present disclosure.
FIG. 12 is a hardware structural diagram of an electronic device according to an embodiment of the present disclosure.

Specific embodiments of the present disclosure are illustrated by the above drawings, and more detailed description will be given below. These drawings and text description are not for limiting the scope of the concept of the present disclosure in any way, but for illustrating the concept of the present disclosure for those skilled in the art by referring to the specific embodiments.

### DETAILED DESCRIPTION

Exemplary embodiments will be described here in detail, and examples thereof are represented in the accompanying drawings. When the following description relates to the accompanying drawings, unless otherwise indicated, the same numbers in different accompanying drawings represent the same or similar elements. The implementations described in the following exemplary embodiments do not represent all implementations consistent with the disclosure.

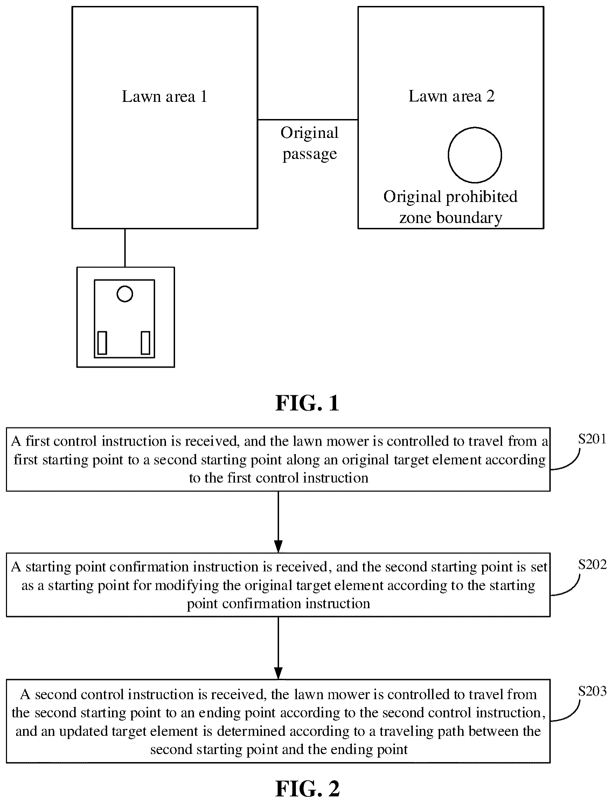

FIG. 1 is a diagram illustrating an application scenario of a method for modifying a map according to an embodiment of the present disclosure. As illustrated in FIG. 1, the accompanying FIG. 1 is an original virtual map, where a rectangular solid line box is an original virtual map boundary 1 (lawn area 1) and the original virtual map boundary 2 (lawn area 2) established by a user, and a circle is an original prohibited zone boundary in lawn area 2. A line connecting the original virtual map boundary 1 to the original virtual map boundary 2 is an original passage. A position of the lawn mower can be a charging station position or any other position. The original virtual map needs to be modified when the user may be dissatisfied with a part of the original virtual map boundary or when the part of the original virtual map boundary needs to change over time such as lawn expansion, after establishing the original virtual map. In addition, the original prohibited zone boundary may be modified when the original prohibited zone boundary changes, and the original passage may also be modified when the original passage changes.

The inventors has found that in the related art, after establishing the original target element (i.e., the original virtual map boundary, the original prohibited zone boundary, or the original passage), it is not allowed to make a partial fine-tuning modification to the original target element. If the user wants to modify the original target element of the map, the user has to delete the entire map firstly, and then redraw the entire map, which takes a long time and is inefficient.

In some other related art, it is allowed to make a modification to the original target element, but the method for modifying the map is not intuitive enough. For example, the user may directly select, drag and perform other operations on the part of the original target element established on a terminal device to modify the established original target element. However, a screen area of the terminal device is usually around 0.06 m², and an actual lawn area is around 300 m². There is a significant difference between the screen area of the terminal device and the actual lawn area. Modifying only based on the original target element displayed on the screen may result in a larger error, the user may need to make multiple modifications to meet his needs, or even after multiple modifications, the needs may still not be satisfied. Therefore, this method for modifying the map is not intuitive and cannot accurately modify the target element in the map, resulting in low accuracy during map modification.

Based on the above problems, the present the present may control movement of the lawn mower by means of an application set on the terminal device, and determine the starting point and ending point of the modified original target element based on the position of the lawn mower. This method is more intuitive and can precisely determine the starting and ending points of the modified original target element, achieving that the modified target element correspond to the actual scene, thereby improving accuracy of the map modification.

FIG. 2 is a flowchart illustrating a method for modifying a map according to an embodiment of the present disclosure. The method is applied to a control component of a lawn mower, and includes the following operations.

At operation S201, a first control instruction is received, and the lawn mower is controlled to travel from a first starting point to a second starting point along an original target element according to the first control instruction.

The first starting point and the second starting point are points on the original target element, and the original target element includes at least one of: an original virtual map boundary, an original prohibited zone boundary, or an original passage.

The first starting point is a position point on the original target element, and when receiving a position of the first starting point, the lawn mower may travel along the original target element from the first starting point to the second starting point.

Since the modified starting point needs is located on the original target element when modifying the map, the lawn mower may only be controlled to travel along the original target element when traveling from the first starting point to the second starting point, that is, travel forward or backward along the original target element from the first starting point, which ensures that the second starting point (i.e., a target starting point of the modified original target element) is also on the original target element.

Through above operation, when the user adjusts a position of the target starting point, the method of always keeping the position point attached to the original target element is adopted, which can prevent the adjusted target starting point from deviating from the original target element. If the target starting point deviates from the original target element, an additional operation is required to bring the target starting point back to the original target element. Compared with the related art, an attachment-based position adjustment method is used by the present disclosure, which reduces the number of operations required for position adjustment.

In an embodiment, an process of establishing the original target element includes that: the lawn mower is manually controlled to travel along an actual lawn area boundary, an obstacle boundary, or a passage between areas, while a positioning device of the lawn mower records multiple position points, and the lawn mower or terminal device establishes the original virtual map according to multiple position points. The original virtual map includes the original target element. Therefore a path traveled by the lawn mower is safe and passable.

During operation S201, i.e., the process of adjusting the position of the target starting point, the lawn mower keeps traveling forward or backward along the original target element, that is, along the path it has traveled. There is no need to travel to other positions, which ensures that the traveling path of the lawn mower is safe and passable when traveling forward or backward along the original target element. There is no need to trigger an additional obstacle avoidance logic or an impassable alarm logic. Operation S201 can ensure the safety of the lawn mower while improving an efficiency of the map modification.

The first control instruction can be a voice instruction or a gesture instruction issued by the user through the application set up on the terminal device, and a relevant control can be displayed on the terminal device. When the user triggers the relevant control, the terminal device may generate the first control instruction and send the generated first control instruction to the lawn mower, so as to control the lawn mower to travel from the first starting point to the second starting point along the original target element.

At operation S202, a starting point confirmation instruction is received, and the second starting point is set as a starting point for modifying the original target element according to the starting point confirmation instruction.

When the lawn mower is traveling from the first starting point to the second starting point, the user can issue the starting point confirmation instruction through the terminal device based on the position of the lawn mower. After confirming that the user has issued the starting point confirmation instruction, the terminal device can send the starting point confirmation instruction to the lawn mower, so that the lawn mower can determine a current position as the second starting point. The second starting point is the target starting point for modifying the original target element.

At operation S203, a second control instruction is received, the lawn mower is controlled to travel from the second starting point to an ending point according to the second control instruction, and an updated target element is determined according to a traveling trajectory between the second starting point and the ending point.

When the lawn mower has reached the second starting point, the lawn mower may be controlled to continue traveling, and during the traveling, it is necessary to control the lawn mower to travel according to an actual boundary of an expanded lawn. The user can issue the second control instruction through the terminal device according to the position of the lawn mower and an actual boundary of the expanded lawn. The second control instruction can be used for turning direction, traveling forward or backward, etc. When the terminal device receives the second control instruction from the user, the terminal device can send the second control instruction to the lawn mower, thereby controlling the lawn mower to travel from the second starting point to the ending point. The ending point is an end position for modifying the original target element, and the lawn mower can obtain the traveling trajectory between the second starting point and the ending point, and the updated target element can be determined based on the traveling trajectory.

During above process, the original target element and the position of the lawn mower can be displayed on a display interface of the terminal device. The user can issue an instruction through the terminal device according to the position of the lawn mower, or receive information from the lawn mower. The terminal device can communicate with the lawn mower, and an information transmission process is related to a communication mode. Optionally, when the terminal device communicates with the lawn mower via wireless fidelity (WIFI), a sender may transmit the information to a server firstly, and then the server transmits the information to a receiver. When the terminal device communicates with the lawn mower via Bluetooth, the sender can directly transmit the information to the receiver. When the sender is the lawn mower, the receiver is the terminal device; when the sender is the terminal device, the receiver is the lawn mower.

The method for modifying the map provided by the present disclosure is applied to the lawn mower, and includes: receiving a first control instruction, and controlling the lawn mower to travel from a first starting point to a second starting point along an original target element according to the first control instruction, herein the second starting point is a point on the original target element, and the original target element includes at least one of: an original virtual map boundary, an original prohibited zone boundary, or an original passage; receiving a starting point confirmation instruction, and setting the second starting point as a starting point for modifying the original target element according to the starting point confirmation instruction; receiving a second control instruction, controlling the lawn mower to travel from the second starting point to an ending point according to the second control instruction, and determining an updated target element according to a traveling trajectory between the second starting point and the ending point. In this way, a position point of the lawn mower does not deviate from the original target element by keeping the position point of the lawn mower always attached to the original target element, which saves an operation of re-adjusting the second starting point to the original target element. As a result, a modification process becomes more intuitive and can correspond to the actual scenario; and the second starting point is determined more accurately, thereby improving the accuracy of the map modification.

In an embodiment, the method further includes the following operations.

A first starting point position instruction is received. The lawn mower is controlled to travel to the first starting point according to the first starting point position instruction. The first starting point position instruction is determined by a terminal device according to a first position point input by a user.

The first starting point on the original target element can also be a position point determined by the user through the terminal device. When the user needs to make the partial modification to the original target element, the first starting point position instruction can be generated through the application of the terminal device firstly, and the terminal device can transmit the first starting point position instruction directly or indirectly to the control component of the lawn mower. When the first starting point position instruction is received, the control component of the lawn mower can obtain the position of the first starting point, plan a path between the current position and the first starting point according to map information, and control the lawn mower to travel to the first starting point along the path.

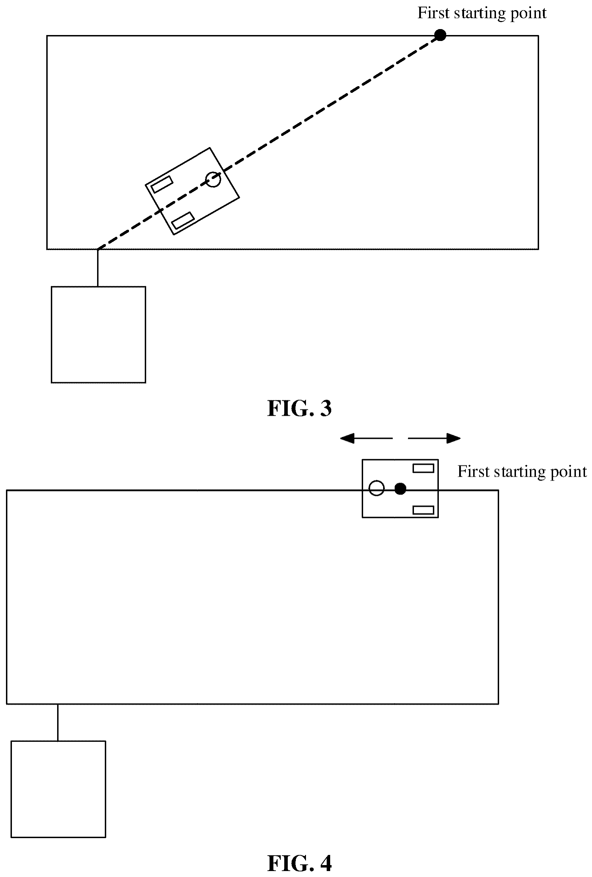

FIG. 3 is a first diagram illustrating a modification for an original virtual map boundary according to an embodiment of the present disclosure. As illustrated in FIG. 3, a rectangle is the original virtual map boundary. When modifying the original virtual map boundary, the user can determine the first starting point firstly, and when the lawn mower receives the first starting point, the lawn mower can travel from the current position to the first starting point.

When the first starting point is not set through the terminal device, the lawn mower can randomly set the position of the first starting point. For example, a position point on the original target element, which is closest to the current position of the lawn mower, may be determined as the first starting point. If the first starting point is set randomly, a distance between the randomly set first starting point and the second starting point may be relatively long. As a result, it takes a longer time to control the lawn mower to travel from the first starting point to the second starting point, which leads to a lower efficiency in modifying the map.

By setting the first starting point based on the terminal device, the position of the first starting point can be flexibly set, so that the first starting point can be set near the second starting point, allowing the lawn mower to reach the second starting point from the current position more quickly, thereby improving the efficiency of the map modification.

In an embodiment, controlling the lawn mower to travel to the first starting point includes the following operations.

A first path from a current position to the first starting point is planned, and the lawn mower is controlled to travel to the first starting point along the first path.

Alternatively, a third control instruction is received and the lawn mower is controlled to travel from the current position to the first starting point according to the third control instruction.

When controlling the lawn mower to travel from the current position to the first starting point, the first path between the current position and the first starting point can be automatically planned for the control component, thereby controlling the lawn mower to travel to the first starting point along the first path. In addition, the lawn mower can be controlled by the user to travel from the current position to the first starting point through the application.

The way of controlling the lawn mower to the first starting point through the control component can be done without the control from the user, but an obstacle may be encountered. The obstacle can be avoided by controlled by the user, so a control mode of the lawn mower can be selected according to the information of the obstacle in a working area between the current position and the first starting point.

In an embodiment, when the first position point is located on the original target element, the first starting point is the first position point; when the first position point is not located on the original target element, the first starting point is a second position point on the original target element, which is closest to the first position point.

The first position point is a position point that the user inputs to the terminal device through the application (APP), and the application can determine the first starting point based on the first position point after receiving the first position point. Optionally, the application can determine whether the first position point is located on the original target element after receiving the first position point. If the first position point is located on the original target element, the first starting point can be determined as the first position point. When it is determined that the first position point is not located on the original target element, that is, when the first position point is outside or inside the original target element, the second position point on the original target element, which is closest to the first position point, can be determined as the first starting point.

The position of the first starting point is restricted through the application, so that the determined first starting point is definitely located on the original target element, thereby increasing the probability that the determined second starting point is located on the original target element.

In an embodiment, during a process of the lawn mower traveling from the first starting point to the second starting point, a perpendicular distance from a position of the lawn mower to the original target element does not exceed a first threshold value.

Ideally, during the process of the lawn mower traveling from the first starting point to the second starting point, the position of the lawn mower is always located on the original target element at every moment. However, there may be a positioning deviation in the lawn mower, that is, the position of the lawn mower may be at a certain distance from the original target element. When the perpendicular distance between the position of the lawn mower and the original target element is less than or equal to the first threshold, it can be considered that the lawn mower is traveling along the original target element. Optionally, the first threshold can be set according to the actual situation, such as 3 cm.

If there is the positioning deviation during the traveling of the lawn mower from the first starting point to the second starting point, the final determined second starting point may not be located on the original target element. In this case, the lawn mower can be controlled to continue to travel from the second starting point to the ending point. When determining the updated target element, a point on the original target element with the closest perpendicular distance to the second starting point may be determined, and a connection line between the point and the second starting point, and the traveling trajectory between the second starting point and the ending point may also be determined, thereby determining the updated target element according to the connection line and the traveling trajectory.

By setting the first threshold, it is allowed for the lawn mower to have a certain deviation from the original target element during traveling from the first starting point to the second starting point, thereby reducing the requirement for positioning accuracy of the lawn mower.

In an embodiment, a front end orientation of the lawn mower when reaching the first starting point is the same as a target front end orientation, and the target front end orientation is a front end orientation of the lawn mower at the first starting point during establishing of the original target element.

When establishing the original target element, there is a certain reference point. Illustratively, a cutting component of the lawn mower is located at right wheel(s) of the lawn mower. To improve a mowing efficiency of the lawn mower, the right wheel(s) of the lawn mower can be used as the reference point when establishing the original target element, and the original target element can be determined based on the traveling trajectory of the right wheel(s).

When modifying a partial part of the original target element, the reference point does not change. Illustratively, when establishing the original target element, the right wheel(s) of the lawn mower is used as the reference point, then when modifying the partial part of the original target element, the right wheel(s) of the lawn mower of the lawn mower is also used as the reference point.

In order to modify the original target element with the same reference point, when the lawn mower travels from the current position to the first starting point, the front end orientation at the first starting point needs to be the same as the target front end orientation, where the target front end orientation is the front end orientation of the lawn mower at the first starting point when the original target element is established. For example, if the target front end orientation is facing west, then when the lawn mower reaches the first starting point, the front end orientation is also determined to face west.

By restricting the front end orientation of the lawn mower when the lawn mower reaches the first starting point, the modified original target element can have the same reference point as the established original target element, thereby improving the accuracy of the modified target element.

In an embodiment, the first control instruction includes a traveling direction; and controlling the lawn mower to travel from the first starting point to the second starting point along the original target element includes the following operations.

The lawn mower is controlled to travel along the original target element according to the traveling direction. The first control instruction is generated by triggering a traveling direction control displayed on a terminal device, and the starting point confirmation instruction is generated by triggering a starting point confirmation control displayed on the terminal device.

When controlling the lawn mower to travel from the first starting point to the second starting point, it is necessary to ensure that the lawn mower travels along the original target element. Therefore, the first control instruction may include the traveling direction, which is forward or backward. Optionally, the user can issue the first control instruction through the terminal device, and the traveling direction control can be displayed on the terminal device. When the user clicks the traveling direction control, the first control instruction containing the traveling direction can be generated. Optionally, the traveling direction control includes two traveling direction controls, i.e., a first traveling direction control and a second traveling direction control. When the user clicks the first traveling direction control, a first control instruction containing a forward direction can be generated, and when the user clicks the second traveling direction control, a second control instruction containing a backward direction can be generated.

When the lawn mower starts traveling along the original target element from the first starting point, the starting point confirmation control can be displayed on the terminal device. When the user determines that the actual position of the lawn mower is the second starting point, the starting point confirmation control can be clicked to generate the starting confirmation instruction, and the terminal device can send the starting confirmation instruction to the lawn mower, so that the lawn mower determines the current position as the second starting point.

FIG. 4 is a second diagram illustrating a modification for an original virtual map boundary according to an embodiment of the present disclosure. As illustrated in FIG. 4, when the lawn mower reaches the first starting point, the lawn mower can be controlled to travel forward or backward along the original target element, thereby determining the second starting point.

It is convenient for the user to control the traveling direction of the lawn mower and determine the second starting point by displaying the traveling direction control and the starting point confirmation control on the terminal device.

In an embodiment, controlling the lawn mower to travel along the original target element according to the traveling direction includes the following operation.

When the traveling direction is opposite to the front end orientation of the lawn mower, wheels of the lawn mower is rotated in an opposite direction, such that the lawn mower travels backward along the original target element.

During the process of the lawn mower traveling from the first starting point to the second, since it is necessary to control the lawn mower to travel along the original target element, the lawn mower is controlled to travel forward or backward along the original target element after reaching the first starting point. Here, "forward" indicates the traveling direction is the same as the front end orientation of the lawn mower, and "backward" indicates that the traveling direction is opposite to the front end orientation of the lawn mower.

When the traveling direction is forward, the control component of the lawn mower can directly control the lawn mower to travel forward. When the traveling direction is backward, the control component of the lawn mower can control the wheels of the lawn mower to rotate in the opposite direction and then control the lawn mower to travel, so that the lawn mower travels backward along the original target element.

Optionally, the lawn mower is equipped with driving wheel(s) and follower wheel(s), with the driving wheels providing power and the follower wheels not providing power. When controlling the wheels of the lawn mower to rotate in the opposite direction, only the driving wheel(s) of the lawn mower can be controlled to rotate in the opposite direction.

There is no need to control the entire lawn mower to turn around by controlling the wheels of the lawn mower to rotate in the opposite direction. If the lawn mower is controlled to turn around, the obstacle may be encountered during the process of turning around, or the obstacle may be encountered when traveling along the original target element after turning around, for example, the obstacle may be encountered when turning a corner.

When the traveling direction is opposite to the front end orientation of the lawn mower, controlling the wheels to rotate in the opposite direction can avoid to rotate the entire lawn mower in the opposite direction, thereby reducing the probability of encountering the obstacles during traveling.

In an embodiment, controlling the lawn mower to travel along the original target element according to the traveling direction includes the following operation.

A traveling speed of the lawn mower is controlled to decrease when detecting that a number of times of the lawn mower traveling back and forth along a partial boundary segment exceeds a first preset number.

When controlling the lawn mower to travel along the original target element according to the traveling direction, it is necessary to control the lawn mower to travel to the second starting point firstly. Since the screen area of the terminal device is usually around 0.06 m², the actual lawn area is around 300 m², and there is a significant difference between the screen area of the terminal device and the actual lawn area, so the first starting point specified by the person through the screen is mostly inconsistent with the target starting point of the person. There is a delay in the instruction issued by the person to the lawn mower. When controlling the lawn mower to travel to the second starting point, multiple back-and-forth adjustments are required to achieve the lawn mower to travel to the second starting point. Illustratively, when controlling the lawn mower to travel forward, the lawn mower is controlled to stop traveling forward when approaching the second starting point. Since the lawn mower will continue to travel a certain distance from receiving a stop motion instruction (or no longer receiving the motion instruction) to the lawn mower being stationary, a position, at which the speed of the lawn mower is 0, may be before the second starting point, or after the second starting point, or located on the second starting point. When the position is before or after the second starting point, it is necessary to control the lawn mower to travel backward or forward again until the position, at which the speed of the lawn mower is 0, is located on the second starting point.

During above process, when it is detected that the number of times of the lawn mower traveling back and forth along the partial boundary segment exceeds a first preset number, it indicates that the second starting point (i.e., target starting point) is located on that partial boundary section. In this case, the traveling speed of the lawn mower may be controlled to decrease, so as to increase the probability that the lawn mower is exactly stationary when the lawn mower travels to the second starting point, thereby improving the efficiency of determining the second starting point.

In an embodiment, the method further includes the following operations. A third position point is determined according to the current speed and the current position of the lawn mower when the stop motion instruction is received (or no motion instruction is received). The third position point is sent to the terminal device, so that the terminal device displays the lawn mower at the third position point on the original target element. The third position point is a position point at which the speed of the lawn mower is 0.

The terminal device may display the original target element in the original virtual map, such as the original virtual map boundary, the original prohibited zone boundary, or the original passage. At the same time, the terminal device may further display the position of the lawn mower to facilitate the user to send the control instruction to the lawn mower.

When the stop motion instruction is sent or no motion instruction is sent, the position point at which the speed of the lawn mower is 0 (i.e., thee third position point) may be displayed on the terminal device, which allows the user to obtain the position point at which the speed of the lawn mower is 0 in advance through the terminal device, without having to wait until the lawn mower is stationary to obtain the position point at which the speed of the lawn mower is 0. Since after receiving the stop motion instruction or no longer receiving the motion instruction, the lawn mower will continue to travel a first distance due to inertia before it stops, the method includes a lawn mower position prediction function, which can predict in advance the position point at which the speed of the lawn mower is 0 and present the position on the terminal device for the user's reference.

In an embodiment, when the third position point corresponding to the lawn mower is a special position in the original target element, such as a corner, and this position is a position at which the user wishes the lawn mower to be stationary, it can enable the user to get ready to issue the corresponding control instruction. There is no need to issue the corresponding control instruction again according to the actual position of the lawn mower on the actual map, which can reduce the time required for the user to issue the corresponding control instruction.

In an embodiment, the method further includes the following operations.

A midpoint of an overlapping section of the partial boundary segment on which the lawn mower has traveled back and forth multiple times is determined as a recommended second starting point when detecting that the number of times of the lawn mower traveling back and forth along the partial boundary segment exceeds a second preset number; and the recommended second starting point is determined as the second starting point when receiving a confirmation instruction for the recommended second starting point from a user.

In the process of determining the second starting point, when the number of times the lawn mower travels back and forth along the partial boundary section exceeds the second preset number, it indicates that the lawn mower has not been located at the second starting point after multiple adjustments. Since the lawn mower travels back and forth along the partial boundary section, there must be the overlapping section, and the second starting point may be at the midpoint of the overlapping section. In this case, the lawn mower can determine the midpoint of the overlapping section as the recommended second starting point and send an inquiry message to the terminal device to enable the user to determine whether the recommended second starting point is determined as the second starting point.

Optionally, the second preset number is more than the first preset number. Illustratively, the first preset is equal to 5, and the second preset is equal to 8.

Optional, the lawn mower sends the inquiry message to the terminal device after determining the recommended second starting point, the terminal device can display a recommended second starting point confirmation control on the display interface. When the user triggers the recommended second starting point confirmation control, the terminal device can send a corresponding recommended second starting confirmation instruction to the lawn mower. In this case, the lawn mower can determine the recommended second starting point as the second starting point.

By determining the midpoint of the overlapping section of the partial boundary as the second starting point using the lawn mower, the second starting point can be automatically determined through the lawn mower. This method can determine the second starting point without requiring the user to control the lawn mower to travel to the target starting point, and the determined second starting point is not significantly different from an actual second starting point.

In an embodiment, the method further includes the following operations.

An ending point confirmation instruction is received, and a current position of the lawn mower is determined as the ending point. The ending point confirmation instruction is generated by triggering an ending point confirmation control displayed on a terminal device.

The ending point confirmation control is displayed on the terminal device when the traveling trajectory of the lawn mower, starting from the second starting point, intersects with the original target element, or when a distance between a current position of the lawn mower and the original target element is less than a preset value.

When the lawn mower reaches the second starting point, the lawn mower can be controlled to continue to travel, and the lawn mower can be controlled to travel from the second starting point to the ending point according to the received second control instruction. Illustratively, the second control instruction is issued by the user through the terminal device, and the second control instruction is used to control the direction in which the lawn mower rotates, or to control the lawn mower to travel forward or backward. Illustratively, in a lawn expansion scenario, the second control instruction can control the lawn mower to travel along a boundary of the expanded lawn.

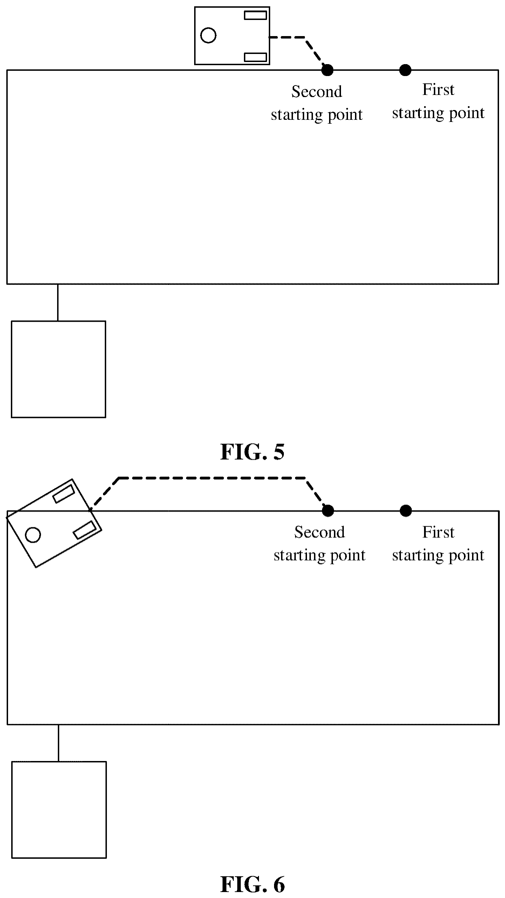

FIG. 5 is a third diagram illustrating a modification for an original virtual map boundary according to an embodiment of the present disclosure. As illustrated in FIG. 5, when the second starting point is determined, the lawn mower can be controlled to travel according to the second control instruction, and the traveling trajectory of lawn mower is the boundary of the expanded lawn.

When the user determines that the lawn mower has reaches the ending point, the user can click the ending point confirmation control displayed on the terminal device to generate the ending point confirmation instruction, and then the terminal device can send the generated ending point confirmation instruction to the lawn mower, and the lawn mower can determine the current position as the ending point, thereby obtaining the traveling trajectory between the second starting point and the ending point.

In order to improve the accuracy of the map modification, the ending point confirmation control can be displayed on the display interface of the terminal device when the current position of the lawn mower meets a preset condition. Since the modification is made to the original target element, a starting point (i.e., the second starting point) of the modified original target element and an ending position (i.e., the ending point) of the modified original target element need to be located on the original target element. When the traveling trajectory of the lawn mower, starting from the second starting point, intersects with the original target element (i.e., when the current position of the lawn mower is located on the original target element), or when the distance between the current position of the lawn mower and the original target element is less than a preset value, it indicates that the current position can be set as the ending point. In this case, the ending point confirmation control can be displayed on the display interface of the terminal device for the user to trigger. Conversely, the ending point confirmation control is not displayed on the display interface of the terminal device when the current position of the lawn mower does not meet the above condition.

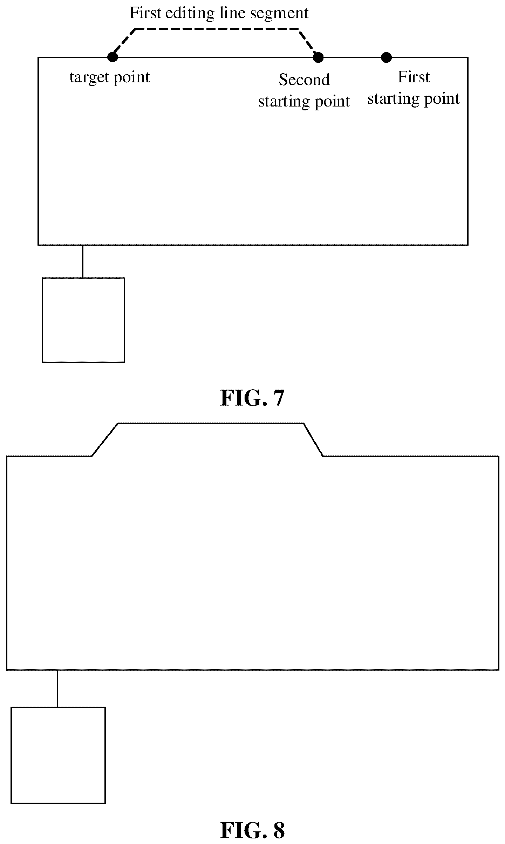

FIG. 6 is a fourth diagram illustrating a modification for an original virtual map boundary according to an embodiment of the present disclosure. FIG. 7 is a fifth diagram illustrating a modification for an original virtual map boundary according to an embodiment of the present disclosure. As illustrated in FIG. 6 and FIG. 7, when the lawn mower travels to the original virtual map boundary, a point can be determined as the ending point if the user triggers the ending point confirmation control. At this time, a target point on the original virtual map boundary is the ending point.

The ending point confirmation control is displayed on the terminal device according to the current position of the lawn mower, and the ending point is determined by triggering the ending point confirmation control by the user, so that a position of the ending point is determined accurately, thereby improving the accuracy of the modification to the original target element.

In an embodiment, determining the updated target element according to the traveling trajectory between the second starting point and the ending point includes the following operations.

The traveling trajectory between the second starting point and the ending point is determined as a first editing line segment. A boundary line between the second starting point and a target point in the original target element is deleted to obtain a remaining boundary line segment. When the ending point is located on the original target element, the target point is the ending point; when the ending point is not located on the original target element, the target point is a point on the original target element, which is closest to the ending point, or the target point is an intersection point between the original target element and a second path. The second path is a path traveled by the lawn mower in a preset direction, and the preset direction is a front end orientation of the lawn mower at the ending point. The updated target element is determined according to the remaining boundary line segment and the first editing line segment.

When determining the updated target element, the traveling trajectory between the second starting point and the ending point can be determined as the first editing line segment. The remaining boundary line segment can also be determined, that is, the boundary line between the second starting point and the target point is deleted to obtain the remaining boundary line segment.

There are two possible cases for the target point herein, when the ending point is located on the original target element, the target point is the ending point; when the ending point is not located on the original target element, two methods can be used to determine the target point. One method is that: the point on the original target element, which is closest to the ending point, is determined as the target point. The other method is that: the intersection point between the original virtual path and the second path is determined as the target point. Here, the second path is the path in which the lawn mower travels in the preset direction, and the preset direction is the front end orientation of the lawn mower when it reaches the ending point. For example, when the lawn mower reaches the ending point with its end front orientation being 45 degrees southwest, 45 degrees southwest can be set as the preset direction, the path traveled by the lawn mower in the preset direction is the second path, and the intersection point between the second path and the original target element is the target point. When the intersection point between the original virtual path and the second path is determined as the target point, there is no need to adjust the front end orientation of the lawn mower after traveling to the ending point when subsequently controlling the lawn mower to travel along the updated target element.

The remaining boundary line segment and the first editing line segment can be combined to obtain the updated target element after determining the remaining boundary line segment and the first editing line segment.

The target point on the original target element is determined, so that the remaining boundary line segment is accurately determined, thereby accurately obtaining the updated target element.

In an embodiment, determining the updated target element according to the remaining boundary line segment and the first editing line segment includes the following operations.

When the ending point is not located on the original target element, the ending point is connected to the target point to obtain a second editing line segment. The second editing line segment is a straight line or an arc. The first editing line segment, the second editing line segment, and the remaining boundary line segment are combined to obtain the updated target element.

When determining the updated target element, there are two cases in which the ending point is located on the original target element, and the ending point is not located on the original target element. When the ending point is on the original target element, the target point is the ending point. FIG. 8 is a sixth diagram illustrating a modification for an original virtual map boundary according to an embodiment of the present disclosure. As illustrated in FIG. 8, in this case, the updated target element can be obtained by directly combining the first editing line segment and the remaining boundary line segment.

When the ending point is not located on the original target element, the ending point and the target point are not connected. In this case, the first editing line segment needs to be connected to the remaining boundary line segment to obtain the second editing line segment. Optionally, the target point is connected to the ending point using a straight line, or the target point is connected to the ending point using the arc, so as to obtain the second editing line segment. Finally, the first editing line segment, the second editing line segment, and the remaining boundary line segments are combined to obtain the updated target element.

When the ending point is not located on the original target element, the second editing line segment can be automatically generated to determine the updated target element.

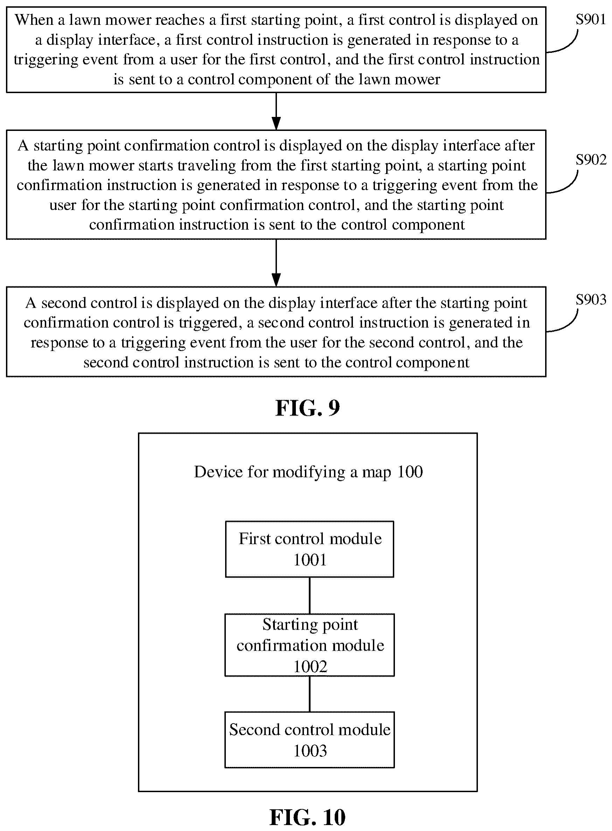

FIG. 9 is a flowchart illustrating another method for modifying a map according to an embodiment of the present disclosure. As illustrated in FIG. 9, the method to a terminal device, and includes the following operations.

At operation S901, when a lawn mower reaches a first starting point, a first control is displayed on a display interface, a first control instruction is generated in response to a triggering event from a user for the first control, and the first control instruction is sent to a control component of the lawn mower, such that the control component controls the lawn mower to travel from the first starting point to a second starting point along an original target element according to a first control instruction. The first starting point and the second starting point are points on the original target element, and the original target element includes at least one of: an original virtual map boundary, an original prohibited zone boundary, or an original passage.

For a terminal device side, when controlling the lawn mower to travel, a position of the lawn mower can be displayed on the display interface of the terminal device, so that different controls can be displayed on the display interface according to the position of the lawn mower.

When the lawn mower reaches the first starting point, the user needs to issue the first control instruction. At this time, the first control may be displayed on the display interface. The first control instruction can be generated by triggering the first control instruction by the user, and the terminal device may send the first control instruction to the lawn mower, so that the lawn mower can travel according to the first control instruction until the lawn mower reaches the second starting point.

At operation S902, a starting point confirmation control is displayed on the display interface after the lawn mower starts traveling from the first starting point, a starting point confirmation instruction is generated in response to a triggering event from the user for the starting point confirmation control, and the starting point confirmation instruction is sent to the control component, such that the control component sets the second starting point as a starting point for modifying the original target element according to the starting point confirmation instruction.

A position of the second starting point needs to be determined by the user. Therefore, when the lawn mower starts traveling from the first starting point, the starting confirmation control can be displayed on the display interface, and the user can determine whether to reach the second starting point according to a current position of the lawn mower. When reaching the second starting point, the starting confirmation control on the display interface is triggered to generate the starting confirmation instruction. After generating the starting confirmation instruction, the starting confirmation instruction can be sent to the terminal device, so that the terminal device can determine the current position as the second starting point (i.e., the starting point for modifying the original target element).

At operation S903, a second control is displayed on the display interface after the starting point confirmation control is triggered, a second control instruction is generated in response to a triggering event from the user for the second control, and the second control instruction is sent to the control component, such that the control component controls the lawn mower to traveling from the second starting point to an ending point according to the second control instruction, and an updated target element is determined according to a traveling trajectory between the second starting point and the ending point.

When the starting point confirmation control is triggered, it indicates that a position of the second starting point is determined. At this time, the second control can be displayed on the display interface so that the user can control the lawn mower to continue to travel from the second starting point until the lawn mower reaches the ending point. The user can trigger the second control according to the position of the lawn mower and an actual boundary of an expanded lawn, so as to generate the second control instruction. The second control instruction can be used for turning direction, traveling forward or backward, etc. Illustratively, different second control instructions can be generated for different triggering ways of the second control by the user, such as turning direction, traveling forward or backward, etc. Alternatively, the second control can also contain three sub-controls, different second control instructions are generated according to the triggering of different sub-controls by the user.

When the terminal device detects that the user has triggered the second control, the terminal device can generate the second control instruction, which can be sent to the lawn mower, so as to control the lawn mower to travel from the second starting point to the ending point. The traveling trajectory from the second starting point to the ending point is used to determine the updated target element.

The method for modifying the map provided by the present disclosure is applied to the terminal device, and includes: when a lawn mower reaches a first starting point, displaying a first control on a display interface, generating a first control instruction in response to a triggering event from a user for the first control, and sending the first control instruction to a control component of the lawn mower, such that the control component controls the lawn mower to travel from the first starting point to a second starting point along an original target element according to the first control instruction, wherein the first starting point and the second starting point are points on the original target element, and the original target element includes at least one of: an original virtual map boundary, an original prohibited zone boundary, or an original passage; displaying a starting point confirmation control on the display interface after the lawn mower starts traveling from the first starting point, generating a starting point confirmation instruction in response to a triggering event from the user for the starting point confirmation control, and sending the starting point confirmation instruction to the control component, such that the control component sets the second starting point as a starting point for modifying the original target element according to the starting point confirmation instruction; and displaying a second control on the display interface after the starting point confirmation control is triggered, generating a second control instruction in response to a triggering event from the user for the second control, and sending the second control instruction to the control component, such that the control component controls the lawn mower to traveling from the second starting point to an ending point according to the second control instruction, and determines an updated target element according to a traveling trajectory between the second starting point and the ending point. In this way, different controls can be displayed on the display interface of the terminal device according to the actual position of the lawn mower, so that the user issues the first control instruction and the second control instruction, and determines a second position point. The position point is always attached to the original target element, such that the position point does not deviate from the original target element, which saves an operation of re-adjusting the second starting point to the original target element. As a result, the modification process becomes more intuitive and can correspond to the actual scenario; and the second starting point is determined more accurately, thereby improving the accuracy of the map modification.

In an embodiment, the method includes the following operations.

In response to a triggering event from the user for a first position point in the display interface, the first starting point is determined according to the first position point.

A first starting point position instruction containing the first starting point is sent to the control component, such that the control component controls the lawn mower to travel to the first starting point according to the first starting point position instruction.

The first starting point may be determined based on a position point selected by the user through the terminal device. The first starting point needs to be located on the original target element, so that the determined second starting point is also located on the original target element after controlling the lawn mower to travel along the original target element. The original target element can be displayed on the display interface of the terminal device, and the user can select the first position point, that is, the user triggers the first position point on the display interface. When the terminal device acquires the triggering event from the user for the first position point, the terminal device can determine the first starting point and send the first starting point position instruction containing the first starting point to the control component of the lawn mower.

When the lawn mower receives the first starting point position instruction, the lawn mower can plan the path between the current position and the first starting point and travel autonomously along the planned path to the first starting point.

Optionally, when inputting the first position point, the user can set the first position point near the second starting point so that the determined first starting point is near the second starting point. Otherwise, a first starting point needs to be randomly set based on the lawn mower, a distance between the randomly set first starting point and the second starting point relatively long. As a result, it takes a longer time to control the lawn mower to travel from the first starting point to the second starting point, which leads to a lower efficiency in modifying the map.

The first position point is input by the user, and the first starting point is determined by receiving, the first starting point can be flexibly set by the user, thereby improving the efficiency of the map modification.

In an embodiment, determining the first starting point according to the first position point includes the following operations.

When the first position point is located on the original target element, the first position point is determined as the first starting point.

When the first position point is not located on the original target element, a second position point on the original target element, which is closest to the first position point, is determined as the first starting point.

After the terminal device acquires the first position point, the terminal device can determine the first starting point. Optionally, the first starting point can be determined according to the positional relationship between the first starting point and the original target element. Since the first starting point must be on the original target element, when the first starting point is located on the original target element, the first position point can be determined as the first starting point. When the first position point is not located on the original target element, the second position point can be selected from the original target element and the second position point will be determined as the first starting point. Optionally, the second position point can be a position point on the original target element that is closest to the first position point.

Determining the first starting point based on the first position point can relax restrictions on the first position point input by the user without requiring the first starting point input by the user to be on the original target element, thereby improving the user experience. Meanwhile, determining the first starting point based on the terminal device can reduce a computational load of the lawn mower.

In an embodiment, the first control is a traveling direction control, and the first control instruction includes a traveling direction.

When the lawn mower reaches the first starting point, the first control can be displayed on the display interface for the user to trigger, thereby generating the first control instruction and allowing the lawn mower to travel to the second starting point based on the first control instruction. Since both the first and second starting points are located on the original target element, it is necessary to control the lawn mower to travel forward or backward along the original target element.

Optionally, the first control can be the traveling direction control. The first control instruction can be generated by triggering the traveling direction control. Illustratively, a first triggering mode for the first control can generate a first control instruction containing a forward direction, and a second triggering mode for the first control can generate a second control instruction containing a backward direction.

Optionally, the traveling direction control includes two traveling direction controls, i.e., a first traveling direction control and a second traveling direction control. When the user clicks the first traveling direction control, the first control instruction containing the forward direction can be generated, and when the user clicks the second traveling direction control, the second control instruction containing the backward direction can be generated.

By setting the traveling direction control, it is convenient to obtain the traveling direction input by the user, so as to travel from the first starting point to the second starting point based on the control from the user.

In an embodiment, the method further includes the following operations.

In response to receiving a message from the control component indicating that a recommended second starting point has been determined, a recommended second starting point confirmation control is displayed on the display interface. In response to a triggering event from the user for the recommended second starting point confirmation control, a confirmation instruction of the user for the recommended second starting point is sent to the control component, such that the control component determines the recommended second starting point as the second starting point.

When the lawn mower is traveling from the first starting point to the second starting point, multiple back-and-forth adjustments are required to achieve a speed of 0 when the lawn mower travels to the second starting point. When the number of times of the lawn mower travels back and forth along a partial boundary section exceeds a second preset number, it indicates that the second starting point is located on that partial boundary section. Since the number of times of the lawn mower travels back and forth in the partial boundary section exceeds the second preset number, it indicates that it is difficult to control the speed of the lawn mower to 0 at the second starting point.

However, since the lawn mower travels back and forth on the partial boundary section multiple times, the lawn mower can select a position point on the partial boundary section as the second starting point. Optionally, when the lawn mower travels back and forth on the partial boundary section, there are an overlapping section, a midpoint of the overlapping section can be determined as the recommended second starting point. To improve the accuracy of the determined second starting point, when the lawn mower determines the recommended second starting point, the lawn mower can also send the message to the terminal device indicating that the midpoint of the overlapping section is determined as the second starting point, so that the user can confirm whether the midpoint of the overlapping section is determined as the second starting point.

When the terminal device receives the message that the recommended second starting point has been determined, the recommended second starting point confirmation control can be displayed on the display interface. If the user triggers the recommended second starting point confirmation control, it indicates that the user has determined the recommended second starting point determined by the lawn mower as the second starting point.

By displaying the recommended second starting point confirmation control on the terminal device, the user can confirm again whether the recommended second starting point is determined as the second starting point on the basis of the automatic determination of the second starting point by the lawn mower, which allows the second starting point to be determined without having to control the lawn mower to travel to the second starting point, thereby improving the user experience while ensuring the accuracy of the determined second starting point.

In an embodiment, the method includes the following operations.

An ending point confirmation control is displayed on the display interface when the traveling trajectory of the lawn mower, starting from the second starting point, intersects with the original target element, or when a distance between a current position of the lawn mower and the original target element is less than a preset value.

In response to a triggering event from the user for the ending point confirmation control, an ending point confirmation instruction is generated, and the ending point confirmation instruction is sent to the control component, such that the control component determines the current position of the lawn mower as the ending point according to the ending point confirmation instruction.

A position of the ending point, which is an end position for modifying the original target element, can also be determined by the user. Since the original target element is modified, both the target starting point (i.e., the second starting point) and the ending point of the modified original target element need to be located on the original target element. As a result, the ending point confirmation control can be displayed on the terminal device when the current position of the lawn mower meets a preset condition. The position of the lawn mower can be displayed on the terminal device when the lawn mower starts traveling from the second starting point. When the traveling trajectory of the lawn mower, starting from the second starting point, intersects with the original target element, or when the distance between the current position of the lawn mower and the original target element is less than the preset value, it indicates that the current position of the lawn mower satisfies the preset condition. That is, the current position of the lawn mower can be set as the ending point, at this time, the ending point confirmation control can be displayed on the display interface of the terminal device for the user to trigger.

When the terminal device receives the triggering event from the user for the ending point confirmation control, the ending point confirmation instruction is generated, so that the ending point confirmation instruction can be sent to the control component of the lawn mower, and the lawn mower determines the current position as the ending point.

The ending point confirmation control is displayed on the terminal device according to the current position of the lawn mower, and the ending point is determined by triggering the ending point confirmation control by the user, so that the position of the ending point is determined accurately, thereby improving the accuracy of the modification to the original target element.

FIG. 10 is a structural diagram of a device for modifying a map according to an embodiment of the present disclosure. As illustrated in FIG. 10, the device is applied to a control component of the lawn mower, and the device 100 includes a first control module 1001, a starting point confirmation module 1002, and a second control module 1003.

The first control module 1001 is configured to: receive a first control instruction, and control the lawn mower to travel from a first starting point to a second starting point along an original target element according to the first control instruction. The first starting point and the second starting point are points on the original target element, and the original target element includes at least one of: an original virtual map boundary, an original prohibited zone boundary, or an original passage.

The starting point confirmation module 1002 is configured to: receive a starting point confirmation instruction, and set the second starting point as a starting point for modifying the original target element according to the starting point confirmation instruction.

The second control module 1003 is configured to: receive a second control instruction, control the lawn mower to travel from the second starting point to an ending point according to the second control instruction, and determine an updated target element according to a traveling trajectory between the second starting point and the ending point.

In an embodiment, the device further includes: a processing module. The processing module is configured to:
receive a first starting point position instruction; and control the lawn mower to travel to the first starting point according to the first starting point position instruction. The first starting point position instruction is determined by a terminal device according to a first position point input by a user

In an embodiment, when controlling the lawn mower to travel to the first starting point, the processing module is specifically configured to:
plan a first path from a current position to the first starting point, and control the lawn mower to travel to the first starting point along the first path.

Alternatively, when controlling the lawn mower to travel to the first starting point, the processing module is specifically configured to: receive a third control instruction and control the lawn mower to travel from the current position to the first starting point according to the third control instruction.

In an embodiment, when the first position point is located on the original target element, the first starting point is the first position point; when the first position point is not located on the original target element, the first starting point is a second position point on the original target element, which is closest to the first position point.

In an embodiment, during a process of the lawn mower traveling from the first starting point to the second starting point, a perpendicular distance from a position of the lawn mower to the original target element does not exceed a first threshold value.

In an embodiment, a front end orientation of the lawn mower when reaching the first starting point is the same as a target front end orientation, and the target front end orientation is a front end orientation of the lawn mower at the first starting point during establishing of the original target element.

In an embodiment, the first control instruction comprises a traveling direction. When controlling the lawn mower to travel to travel from the first starting point to the second starting point along the original target element, the first control module 1001 is specifically configured to:
control the lawn mower to travel along the original target element according to the traveling direction, herein the first control instruction is generated by triggering a traveling direction control displayed on a terminal device, and the starting point confirmation instruction is generated by triggering a starting point confirmation control displayed on the terminal device.

In an embodiment, when controlling the lawn mower to travel along the original target element according to the traveling direction, the first control module 1001 is specifically configured to:
when the traveling direction is opposite to the front end orientation of the lawn mower, rotate wheels of the lawn mower in an opposite direction, such that the lawn mower travels backward along the original target element.

In an embodiment, when controlling the lawn mower to travel along the original target element according to the traveling direction, the first control module 1001 is specifically configured to:
control a traveling speed of the lawn mower to decrease when detecting that a number of times of the lawn mower traveling back and forth along a partial boundary segment exceeds a first preset number.

In an embodiment, the device further includes a recommended second starting point confirmation module. The recommended second starting point confirmation module is specifically configured to:
determine a midpoint of an overlapping section of the partial boundary segment on which the lawn mower has traveled back and forth multiple times as a recommended second starting point when detecting that the number of times of the lawn mower traveling back and forth along the partial boundary segment exceeds a second preset number; and determine the recommended second starting point as the second starting point when receiving a confirmation instruction for the recommended second starting point from a user.

In an embodiment, the device further includes an ending point confirmation module. The ending point confirmation module is specifically configured to:
receive an ending point confirmation instruction, and determine a current position of the lawn mower as the ending point. The ending point confirmation instruction is generated by triggering an ending point confirmation control displayed on a terminal device.

The ending point confirmation control is displayed on the terminal device when the traveling trajectory of the lawn mower, starting from the second starting point, intersects with the original target element, or when a distance between a current position of the lawn mower and the original target element is less than a preset value.

In an embodiment, when determining the updated target element according to the traveling trajectory between the second starting point and the ending point, the second control module 1003 is specifically configured to:
determine the traveling trajectory between the second starting point and the ending point as a first editing line segment;
delete a boundary line between the second starting point and a target point in the original target element to obtain a remaining boundary line segment, herein when the ending point is located on the original target element, the target point is the ending point; when the ending point is not located on the original target element, the target point is a point on the original target element, which is closest to the ending point, or the target point is an intersection point between the original target element and a second path, herein the second path is a path traveled by the lawn mower in a preset direction, and the preset direction is a front end orientation of the lawn mower at the ending point; and
determine the updated target element according to the remaining boundary line segment and the first editing line segment.

In an embodiment, when determining the updated target element according to the remaining boundary line segment and the first editing line segment, the second control module 1003 is specifically configured to:
when the ending point is not located on the original target element, connect the ending point and the target point to obtain a second editing line segment, herein the second editing line segment is a straight line or an arc; and
combine the first editing line segment, the second editing line segment, and the remaining boundary line segment to obtain the updated target element.

The device for modifying the map provided by an embodiment of the present disclosure can implement the method for modifying the map in the embodiments as illustrated in FIG. 2, the implementation principle and technical effect of them are similar and will not be elaborated here.

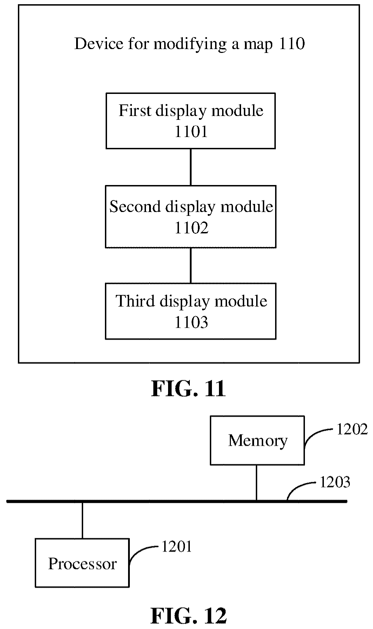

FIG. 11 a structural diagram of another device for modifying a map according to an embodiment of the present disclosure. As illustrated in FIG. 11, the device is applied to a terminal device, and the device 110 includes: a first display module 1101, a second display module 1102, and a third display module 1103.

The first display module 1101 is configured to: display a first control on a display interface when a lawn mower reaches a first starting point, generate a first control instruction in response to a triggering event from a user for the first control, and send the first control instruction to a control component of the lawn mower, such that the control component controls the lawn mower to travel from the first starting point to a second starting point along an original target element according to a first control instruction. The first starting point and the second starting point are points on the original target element, and the original target element includes at least one of: an original virtual map boundary, an original prohibited zone boundary, or an original passage.

The second display module 1102 is configured to: display a starting point confirmation control on the display interface after the lawn mower starts traveling from the first starting point, generate a starting point confirmation instruction in response to a triggering event from the user for the starting point confirmation control, and send the starting point confirmation instruction to the control component, such that the control component sets the second starting point as a starting point for modifying the original target element according to the starting point confirmation instruction.

The third display module 1103 is configured to: display a second control on the display interface after the starting point confirmation control is triggered, generate a second control instruction in response to a triggering event from the user for the second control, and send the second control instruction to the control component, such that the control component controls the lawn mower to traveling from the second starting point to an ending point according to the second control instruction, and determine an updated target element according to a traveling trajectory between the second starting point and the ending point.

In an embodiment, the device further includes: a first starting point confirmation module. The first starting point confirmation module is specifically configured to:
in response to a triggering event from the user for a first position point in the display interface, determine the first starting point according to the first position point; and
send a first starting point position instruction containing the first starting point to the control component, such that the control component controls the lawn mower to travel to the first starting point according to the first starting point position instruction.

In an embodiment, when determining the first starting point according to the first position point the first starting confirmation module, the first position point is specifically configured to:
when the first position point is located on the original target element, determine the first position point as the first starting point;
when the first position point is not located on the original target element, determine a second position point on the original target element, which is closest to the first position point, as the first starting point.

In an embodiment, the first control is a traveling direction control, and the first control instruction comprises a traveling direction.

In an embodiment, the device further includes a fourth display module. The fourth display module is specifically configured to:
in response to receiving a message from the control component indicating that a recommended second starting point has been determined, display a recommended second starting point confirmation control on the display interface; and in response to a triggering event from the user for the recommended second starting point confirmation control, send a confirmation instruction of the user for the recommended second starting point to the control component, such that the control component determines the recommended second starting point as the second starting point

In an embodiment, the device further includes: a fifth display module. The fifth display module specifically configured to:
display an ending point confirmation control on the display interface when the traveling trajectory of the lawn mower, starting from the second starting point, intersects with the original target element, or when a distance between a current position of the lawn mower and the original target element is less than a preset value; and
in response to a triggering event from the user for the ending point confirmation control, generate an ending point confirmation instruction, and send the ending point confirmation instruction to the control component, such that the control component determines the current position of the lawn mower as the ending point according to the ending point confirmation instruction.

The device for modifying the map provided by an embodiment of the present disclosure can implement the method for modifying the map in the embodiments as illustrated in FIG. 9, the implementation principle and technical effect of them are similar and will not be elaborated here.

FIG. 12 is a hardware structural diagram of an electronic device according to an embodiment of the present disclosure. As illustrated in FIG. 12, the electronic device provided in the present embodiment includes: at least one processor 1201 and a memory 1202. The processor 1201 and the memory 1202 are connected through a bus 1203.

In a specific implementation, the at least one processor 1201 is configured to execute a computer execution instruction stored in memory 1202 to cause the at least one processor 1201 perform the method in the above method embodiments.

The specific implementation process of the processor 1201 can refer to the above method embodiments, the implementation principle and technical effect of them are similar and will not be elaborated here.

In the embodiments illustrated in FIG. 12 above, it should be understood that the processor may be a central processing unit (CPU for short), or may be another general purpose processor, a digital signal processor (DSP for short), an application-specific integrated circuit (ASIC for short), or the like. The general purpose processor may be a microprocessor, or the processor may be any conventional processor or the like. The operations of the methods disclosed by the present disclosure may be directly implemented by a hardware processor, or may be implemented by a combination of a hardware and a software module in a processor.

The memory may include a high-speed random access memory (RAM) memory, and may also include a non-volatile memory (NVM), such as at least one disk memory.

The bus may be an industry standard architecture (ISA) bus, a peripheral component interconnect (PCI) bus, an extended industry standard architecture (EISA) bus, or the like. The bus may be classified into an address bus, a data bus, a control bus, and the like. For convenience of representation, the bus in the accompanying drawings of the present disclosure is not limited to only one bus or one type of bus.

An embodiment of the present disclosure also provides a computer-readable storage medium having computer-executable instructions stored therein, the computer-executable instructions is configured to, when executed by a processor, implement the method in the above method embodiments.

The above computer-readable storage medium may be realized by any type of volatile or non-volatile storage devices or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk. The readable storage medium can be any available medium that can be accessed by a general purpose or special purpose computer.

An exemplary readable storage medium is coupled to a processor such that the processor can read information from the readable storage medium, and write information to the readable storage medium. Of course, the readable storage medium can also be an integral part of the processor. The processor and the readable storage medium may be located in an application specific integrated circuit (ASIC). Of course, the processor and the readable storage medium may also exist in the apparatus as discrete components.

An embodiment of the present disclosure further provides a computer program product, which includes a computer program. The computer program is configured to, when executed by a processor, implement the method in the above method embodiments.

Those of ordinary skill in the art can understand that all or part of the operations for implementing the above method embodiments may be completed by program instructions related to hardware. The aforementioned program can be stored in a computer-readable storage medium. When the program is executed, the operations including the above method embodiments are executed; and the aforementioned storage medium includes: an ROM, an RAM, a magnetic disk or an optical disk and other mediums that can store program codes.

Finally, it should be noted that the above embodiments are only used to illustrate the technical solutions of the present disclosure, but not to limit them; although the present disclosure has been described in detail with reference to the foregoing embodiments, those of ordinary skill in the art should understand that: the technical solutions described in the foregoing embodiments can still be modified, or equivalent replacements can be made to some or all of the technical features thereof; and these modifications or replacements do not make the essence of the corresponding technical solutions deviate from the scope of the technical solutions of the embodiments of the present disclosure.

## Claims

1. A method for modifying a map, the method being applied to a control component of a lawn mower, and the method comprising:
receiving a first control instruction, and controlling the lawn mower to travel from a first starting point to a second starting point along an original target element according to the first control instruction, wherein the first starting point and the second starting point are points on the original target element, and the original target element comprises at least one of: an original virtual map boundary, an original prohibited zone boundary, or an original passage;
receiving a starting point confirmation instruction, and setting the second starting point as a starting point for modifying the original target element according to the starting point confirmation instruction; and
receiving a second control instruction, controlling the lawn mower to travel from the second starting point to an ending point according to the second control instruction, and determining an updated target element according to a traveling trajectory between the second starting point and the ending point.

2. The method of claim 1, further comprising:
receiving a first starting point position instruction; and
controlling the lawn mower to travel to the first starting point according to the first starting point position instruction, wherein the first starting point position instruction is determined by a terminal device according to a first position point input by a user.

3. The method of claim 2, wherein controlling the lawn mower to travel to the first starting point comprises:
planning a first path from a current position to the first starting point, and controlling the lawn mower to travel to the first starting point along the first path; or
receiving a third control instruction and controlling the lawn mower to travel from the current position to the first starting point according to the third control instruction.

4. The method of claim 2, wherein
when the first position point is located on the original target element, the first starting point is the first position point;
when the first position point is not located on the original target element, the first starting point is a second position point on the original target element, which is closest to the first position point.

5. The method of claim 1, wherein during a process of the lawn mower traveling from the first starting point to the second starting point, a perpendicular distance from a position of the lawn mower to the original target element does not exceed a first threshold value.

6. The method of claim 1, wherein a front end orientation of the lawn mower when reaching the first starting point is the same as a target front end orientation, and the target front end orientation is a front end orientation of the lawn mower at the first starting point during establishing of the original target element.

7. The method of claim 6, wherein the first control instruction comprises a traveling direction; and controlling the lawn mower to travel from the first starting point to the second starting point along the original target element comprises:
controlling the lawn mower to travel along the original target element according to the traveling direction, wherein the first control instruction is generated by triggering a traveling direction control displayed on a terminal device, and the starting point confirmation instruction is generated by triggering a starting point confirmation control displayed on the terminal device.

8. The method of claim 7, wherein controlling the lawn mower to travel along the original target element according to the traveling direction comprises:
when the traveling direction is opposite to the front end orientation of the lawn mower, rotating wheels of the lawn mower in an opposite direction, such that the lawn mower travels backward along the original target element.

9. The method of claim 7, wherein controlling the lawn mower to travel along the original target element according to the traveling direction comprises:
controlling a traveling speed of the lawn mower to decrease when detecting that a number of times of the lawn mower traveling back and forth along a partial boundary segment exceeds a first preset number.

10. The method of claim 9, further comprising:
determining, when detecting that the number of times of the lawn mower traveling back and forth along the partial boundary segment exceeds a second preset number, a midpoint of an overlapping section of the partial boundary segment on which the lawn mower has traveled back and forth multiple times as a recommended second starting point; and determining, when receiving a confirmation instruction for the recommended second starting point from a user, the recommended second starting point as the second starting point.

11. The method of any one of claims 1 to 10, further comprising:
receiving an ending point confirmation instruction, and determining a current position of the lawn mower as the ending point, wherein the ending point confirmation instruction is generated by triggering an ending point confirmation control displayed on a terminal device,
wherein the ending point confirmation control is displayed on the terminal device when the traveling trajectory of the lawn mower, starting from the second starting point, intersects with the original target element, or when a distance between a current position of the lawn mower and the original target element is less than a preset value.

12. The method of claim 11, wherein determining the updated target element according to the traveling trajectory between the second starting point and the ending point comprises:
determining the traveling trajectory between the second starting point and the ending point as a first editing line segment;
deleting a boundary line between the second starting point and a target point in the original target element to obtain a remaining boundary line segment, wherein when the ending point is located on the original target element, the target point is the ending point; when the ending point is not located on the original target element, the target point is a point on the original target element, which is closest to the ending point, or the target point is an intersection point between the original target element and a second path, wherein the second path is a path traveled by the lawn mower in a preset direction, and the preset direction is a front end orientation of the lawn mower at the ending point; and
determining the updated target element according to the remaining boundary line segment and the first editing line segment.

13. The method of claim 12, wherein determining the updated target element according to the remaining boundary line segment and the first editing line segment comprises:
when the ending point is not located on the original target element, connecting the ending point and the target point to obtain a second editing line segment, wherein the second editing line segment is a straight line or an arc; and
combining the first editing line segment, the second editing line segment, and the remaining boundary line segment to obtain the updated target element.

14. A method for modifying a map, the method being applied to a terminal device, and the method comprising:
when a lawn mower reaches a first starting point, displaying a first control on a display interface, generating a first control instruction in response to a triggering event from a user for the first control, and sending the first control instruction to a control component of the lawn mower, such that the control component controls the lawn mower to travel from the first starting point to a second starting point along an original target element according to the first control instruction, wherein the first starting point and the second starting point are points on the original target element, and the original target element comprises at least one of: an original virtual map boundary, an original prohibited zone boundary, or an original passage;
displaying a starting point confirmation control on the display interface after the lawn mower starts traveling from the first starting point, generating a starting point confirmation instruction in response to a triggering event from the user for the starting point confirmation control, and sending the starting point confirmation instruction to the control component, such that the control component sets the second starting point as a starting point for modifying the original target element according to the starting point confirmation instruction; and
displaying a second control on the display interface after the starting point confirmation control is triggered, generating a second control instruction in response to a triggering event from the user for the second control, and sending the second control instruction to the control component, such that the control component controls the lawn mower to traveling from the second starting point to an ending point according to the second control instruction, and determines an updated target element according to a traveling trajectory between the second starting point and the ending point.

15. The method of claim 14, further comprising:
in response to a triggering event from the user for a first position point in the display interface, determining the first starting point according to the first position point; and
sending a first starting point position instruction containing the first starting point to the control component, such that the control component controls the lawn mower to travel to the first starting point according to the first starting point position instruction.

16. The method of claim 15, wherein determining the first starting point according to the first position point comprises:
when the first position point is located on the original target element, determining the first position point as the first starting point;
when the first position point is not located on the original target element, determining a second position point on the original target element, which is closest to the first position point, as the first starting point.

17. The method of claim 14, wherein the first control is a traveling direction control, and the first control instruction comprises a traveling direction.

18. The method of claim 14, further comprising:
in response to receiving a message from the control component indicating that a recommended second starting point has been determined, displaying a recommended second starting point confirmation control on the display interface; and
in response to a triggering event from the user for the recommended second starting point confirmation control, sending a confirmation instruction of the user for the recommended second starting point to the control component, such that the control component determines the recommended second starting point as the second starting point.

19. The method of any one of claims 14 to 18, further comprising:
displaying an ending point confirmation control on the display interface when the traveling trajectory of the lawn mower, starting from the second starting point, intersects with the original target element, or when a distance between a current position of the lawn mower and the original target element is less than a preset value; and
in response to a triggering event from the user for the ending point confirmation control, generating an ending point confirmation instruction, and sending the ending point confirmation instruction to the control component, such that the control component determines the current position of the lawn mower as the ending point according to the ending point confirmation instruction.

20. A device for modifying a map, the device being applied to a control component of a lawn mower, and the device comprising:
a first control module, configured to receive a first control instruction, and control the lawn mower to travel from a first starting point to a second starting point along an original target element according to the first control instruction, wherein the first starting point and the second starting point are points on the original target element, and the original target element comprises at least one of: an original virtual map boundary, an original prohibited zone boundary, or an original passage;
a starting point confirmation module, configured to receive a starting point confirmation instruction, and set the second starting point as a starting point for modifying the original target element according to the starting point confirmation instruction; and
a second control module, configured to receive a second control instruction, control the lawn mower to travel from the second starting point to an ending point according to the second control instruction, and determine an updated target element according to a traveling trajectory between the second starting point and the ending point.

21. A device for modifying a map, the device being applied to a terminal device, and the device comprising:
a first display module, configured to: display a first control on a display interface when a lawn mower reaches a first starting point; generate a first control instruction in response to a triggering event from a user for the first control; and send the first control instruction to a control component of the lawn mower, such that the control component controls the lawn mower to travel from the first starting point to a second starting point along an original target element according to a first control instruction, wherein the first starting point and the second starting point are points on the original target element, and the original target element comprises at least one of: an original virtual map boundary, an original prohibited zone boundary, or an original passage;
a second display module, configured to: display a starting point confirmation control on the display interface after the lawn mower starts traveling from the first starting point; generate a starting point confirmation instruction in response to a triggering event from the user for the starting point confirmation control; and send the starting point confirmation instruction to the control component, such that the control component sets the second starting point as a starting point for modifying the original target element according to the starting point confirmation instruction; and
a third display module, configured to: display a second control on the display interface after the starting point confirmation control is triggered; generate a second control instruction in response to a triggering event from the user for the second control; and send the second control instruction to the control component, such that the control component controls the lawn mower to traveling from the second starting point to an ending point according to the second control instruction, and determines an updated target element according to a traveling trajectory between the second starting point and the ending point.

22. An electronic device, comprising: at least one processor and a memory, wherein
the memory is configured to store computer-executable instructions; and
the at least one processor is configured to execute the computer-executable instructions stored in the memory to cause the at least one processor to perform the method of any one of claims 1 to 19.

23. A computer-readable storage medium, having stored thereon computer-executable instructions that when executed by a processor, implement the method of any one of claims 1 to 19.

24. A computer program product, comprising a computer program that when executed by a processor, implement the method of any one of claims 1 to 19.
